# EUROPEAN PATENT SPECIFICATION

(11) **EP 1 422 779 B1**
(45) Date of publication and mention of the grant of the patent: **26.01.2011**
(21) Application number: 03257243.0
(22) Date of filing: 18.11.2003
(51) Int. Cl.: H01M 8/12

(54) **A fuel cell**
Brennstoffzelle
Pile à combustible

(30) Priority: 21.11.2002 GB 0227180
(43) Date of publication of application: 26.05.2004
(73) Proprietor: Omnagen Limited, Hertfordshire, AL10 9JS (GB)
(72) Inventor: Omersa, Kenneth Edward Anthony, Hertfordshire AL10 9JS (GB)
(74) Representative: Gill, Stephen Charles

(56) References cited:
- EP-A- 1 225 648
- US-A- 3 437 525
- US-A- 5 629 103
- US-A1- 2002 048 699
- US-A1- 2002 155 335
- US-A1- 2002 168 555

## Description

The present invention relates to a fuel cell, and more particularly to a solid state fuel cell.

A fuel cell is an electrical device which generates an electric current by reaction of a fuel with an oxidant without direct combustion. In general, fuel cells consist of a pair of electrodes separated by an electrolyte. The electrolyte only allows the passage of certain ions. The selective passage of ions across the electrolyte results in a potential being generated between the two electrodes. This potential can be harnessed to do useful work, such as generating electricity in a home, or for powering a vehicle.

There are various types of fuel cells which are categorised according to the type of electrolyte they contain. A considerable amount of work has been carried out on proton exchange membrane (PEM) fuel cells, in which the electrolyte is a polymeric membrane which is selectively permeable to ions. One example of a suitable polymer is "Nafion" (RTM) which conducts protons when hydrated. PEM cells generally operate near the boiling point of water. In simplified terms, hydrogen fuel is oxidised to protons at one electrode (anode) which then cross the membrane, whilst oxygen is reduced at the other electrode (cathode). In theory, the only waste product from this reaction is water.

Because of the aggressive conditions found within operating PEM cells, the structural elements of the fuel cell must be able to withstand the potentially corrosive environment. Metal elements tend to be corrosion resistant or coated with a corrosion resistant layer. However, electrical connections must not be impeded. Steel and nickel alloys are often used in this type of application. Other metals have been used for their aqueous corrosion resistance, such as aluminium, titanium or alloys thereof, as described in US 5578388 and US 3437525.

In addition to PEM cells, a number of other types of fuel cells have been developed. Solid oxide fuel cells (SOFCs) are a type of fuel cell which operate at relatively high temperatures, around 850 to 1000°C. SOFCs which run at lower temperatures have been proposed, for example using cerium gadolinium oxide (CGO) as electrolyte. Fuel cells using CGO may be operable at or below 600°C. Because of the high temperatures, the cells are often entirely made from ceramic materials. Typically, the electrolyte would be made from yttria stabilised zirconia (YSZ), the fuel electrode made from a nickel oxide/YSZ cermet, and the oxidant electrode made from a doped lanthanum manganite. Another possible electrode material is lanthanum strontium cobalt iron (lanthanum strontium cobalt ferrite or LSCF). There are broadly two structural types of SOFC; tubular cells and planar cells. Although easier to produce, the planar cells suffer from difficulties with sealing around the ceramic parts of the cell. Both the planar and tubular types of cells suffer problems relating to the brittle nature of ceramic materials. These problems are exacerbated by temperature cycling which occurs in many uses of fuel cells.

Another type of ceramic fuel cell being developed is a protonic ceramic fuel cell (PCFC) which conducts protons through the solid ceramic electrolyte.

A further problem of ceramic-based fuel cells is matching the thermal expansion coefficients of various structural elements. This is particularly a problem with metallic elements, whose thermal expansion coefficients may be quite different to those of ceramic elements. Mismatched thermal expansion coefficients can lead to catastrophic failure of structural components of the cell.

It is to be appreciated that many of these prior art fuel cells suffer from a number of disadvantages, such as the need for expensive materials, complicated manufacture, and the risk of structural failure due to the brittle nature of ceramics.

EP-A-1225648 (Nissan) describes a solid oxide fuel cell in which an air or a fuel electrode is in at least two layers having differing degrees of porosity.

US-A-2002/0048699 (Steele et al) describes a solid oxide fuel cell comprising a ferritic steel substrate including a porous region and a non-porous region.

There exists a need for an improved fuel cell which is simple to manufacture.

According to one aspect of the present invention, there is provided a solid state fuel cell comprising a ceramic electrolyte, the fuel cell comprising a member having a porous region, the porous region being bounded by a non-porous region, and the member supporting one or more ceramic layers at least one of which is the electrolyte, wherein the member comprises metallic titanium or an alloy thereof comprising at least 51% titanium.

Preferably, the fuel cell is a ceramic fuel cell.

Conveniently, the fuel cell is a solid oxide fuel cell (SOFC).

Advantageously, the fuel cell is a protonic ceramic fuel cell (PCFC).

Advantageously, the fuel cell has an electrode comprising the member.

Preferably, the member supports an electrode.

Preferably, at least one of the one or more ceramic layers comprises cerium gadolinium oxide (CGO), yttria stabilised zirconia (YSZ), nickel oxide/YSZ cermet, nickel oxide/CGO cermet, LSCF/CGO and/or doped lanthanum manganite.

Conveniently, at least one of the one or more ceramic layers is an electrode.

Advantageously, at least one of the one or more ceramic layers is an interface layer.

Conveniently, the member is a structural member.

Advantageously, the fuel cell further comprises an interconnect comprising titanium or an alloy thereof, the interconnect preferably comprising at least 51 wt% titanium.

Preferably, the interconnect is in contact with a member according to the invention.

Conveniently, the porous region comprises sintered metal powder.

Advantageously, the porous region comprises metal felt.

Preferably, the porous region is formed by laser machining.

Conveniently, the porous region is formed by electrodeposition.

Advantageously, the porous region is formed by etching.

Preferably, the etching is photochemical etching.

Conveniently, the etching is electrochemical etching.

Advantageously, the member and/or interconnect is formed by pressing.

Preferably, the member and/or interconnect is formed by superplastic forming.

Conveniently, the member and/or interconnect comprise at least 98% wt titanium.

Advantageously, the member and/or interconnect comprise at least 85% wt titanium.

Preferably, the member and/or interconnect comprise at least 76% wt titanium.

Advantageously, the member and/or interconnect comprise at least 51% wt titanium.

Conveniently, the member and/or interconnect comprise non-alloyed titanium.

Advantageously, the member and/or interconnect comprise a titanium alloy.

Preferably, the titanium alloy is selected from the group consisting of Ti-6A-4V, Ti-3Al-2.5V, Ti-6Al-2Sn-4Zr-2Mo-0.08Si and Ti-15Mo-3Nb-3Al-0.2Si.

Conveniently, the member and/or interconnect comprise metal foil.

The present invention will now be described, by way of example, with reference to the accompanying drawings in which
Figure 1 is a schematic illustration of a known fuel cell
Figure 2 is a schematic perspective view of the elements of an embodiment of a fuel cell according to the invention,
Figure 3 is a cross-sectional view of an electrode substrate according to the invention,
Figure 4 is a cross-sectional view of an alternative embodiment of an electrode substrate,
Figure 5 is a cross-sectional view of a further embodiment of an electrode substrate,
Figure 6 is a cross-sectional view of an alternative embodiment of an electrode substrate, and
Figure 7 is a cross-sectional view of a stack of fuel cells according to the invention.

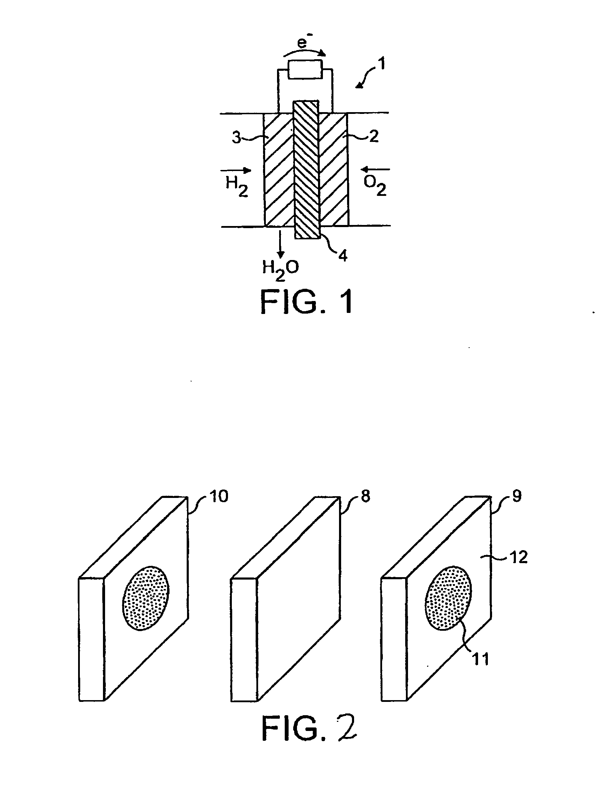

Turning to figure 1, a solid oxide fuel cell is shown generally at 1 with a pair of electrodes 2 and 3. Electrode 2 is the cathode (also called the air electrode), and electrode 3 is the anode (also called the fuel electrode). Sandwiched between the electrodes 2 and 3 is a ceramic electrolyte 4 which only permits the transport of oxide anions (O²⁻). Oxygen is delivered to the cathode 2 and hydrogen is delivered to the anode 3. Oxygen is reduced at the cathode 2 (gains electrons) to give oxide anions (O²⁻) which can then travel across the electrolyte 4 to reach the anode 3. At the anode 3, the fuel reacts with the oxide anions to give the exhaust product water (H₂O). Under practical conditions, it is thought that other species may be formed. As a result of the selective ionic permeability of the electrolyte 4, a useful potential is created across the electrodes 2 and 3.

Figure 2 is an exploded view of certain elements of a fuel cell of the invention. A solid ceramic electrolyte 8 is shown separating a cathode 9 and an anode 10. Although these electrodes and electrolyte would be sandwiched together, they are shown spaced apart for clarity. As metals are good thermal and electrical conductors, they have been used in PEM cells. However, they have not been a popular choice in solid state cells because of problems such as mechanical incompatibility with ceramic materials, and failure at high temperature.The cathode 9 is constructed from titanium foil and has a central porous region 11. However, the cathode 9 further comprises a non-porous region 12 which surrounds the porous region 11. Anode 10 is constructed in a similar fashion to cathode 9. The non-porous region 12 of the electrode helps to create a gas-tight seal with other parts of the fuel cell to prevent the unwanted direct combination of oxidant and fuel. The electrodes 9 and 10 are each preferably constructed from an integral sheet of titanium foil of which a portion is treated or machined to become porous.

The pores in the electrodes 9 and 10 may be made in ways known to a person skilled in the art, such as by chemical etching of the titanium foil, or photolithography followed by selective chemical or electrochemical etching. Alternatively, the pores may be made by laser machining. The porous region may also be formed by electrodeposition a technique which is known in the art.

In order to allow for the economical construction of the porous electrodes, the electrodes are preferably made from metal foil. Blanks may conveniently be cut from a sheet or roll of the metal, for example by laser cutting.

In addition to titanium metal itself, it is to be appreciated that suitable titanium alloys could also be used, including commercially available alloys such as Ti-6Al-4V, Ti-3Al-2.5V, Ti-6Al-2Sn-4Zr-2Mo-0.08Si, and "Timetal 21S" (RTM) (Ti-15Mo-3Nb-3Al-0.2Si) sold by the Timet Corporation of Denver, Colorado, US and its global distributors. In other words, either substantially pure metallic titanium or an alloy containing at least 51 wt% of titanium, is suitable. Non-metallic substances (such as ceramic materials or substances containing titanium dioxide rather than metallic titanium), are not considered to be suitable for use as members or interconnects of the invention.

It is to be appreciated that titanium is an extremely strong metal with a high melting point. Thus, the fuel cell may operate at a relatively high temperature without the titanium or titanium alloy member melting. Also, the strength of these metals ensure that the titanium-containing members of the invention can support other structural members of the fuel cell.

Furthermore, the thermal expansion coefficients of titanium and its alloys are suitable for use with a range of ceramics. Matching of the thermal expansion coefficients leads to a reduced tendency to fail under thermal cycling. For example YSZ has a value of 10 to 11 x 10⁻⁶ per °C, whereas bismuth oxide has a value of 24 x 10⁻⁶ per °C in its cubic form. Bismuth oxide has a very low melting point for a ceramic (825°C), and its high oxygen ion conductivity is due to a large proportion of vacancies in the oxygen matrix. Aluminium or alloys thereof would make a good thermal expansion match for this ceramic. Aluminium or alloys thereof may then be used for the substrates, interconnects and other structures, perhaps with a protective coating to assist with oxidation resistance.

Oxides have many different crystallographic structures-fluorite and perovskite being among the most common. These different structures can have a very wide range of thermal expansion coefficients - in the case of perovskites ranging from roughly 9 to 19 x 10⁻⁶ per °C. In a number of cases nickel or cobalt alloys, or austenitic stainless steels will have very compatible thermal expansion coefficients, and would be suitable materials to use as substrates, interconnects and for other structures.

One problem of prior art fuel cells is the difficulty in creating an effective seal with ceramic members. ]

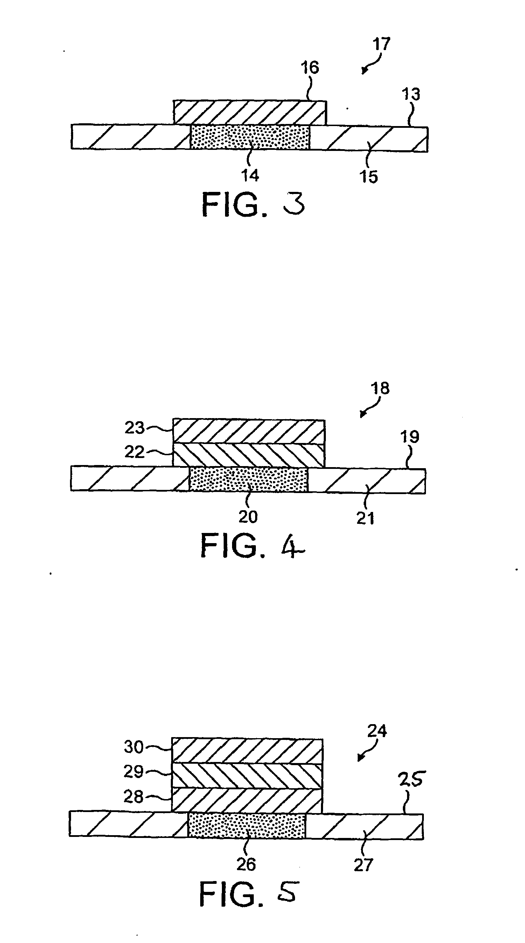

Figure 3 is a cross section of a titanium substrate 13 manufactured from titanium foil. The element 13 has a porous region 14 surrounded by a non-porous region 15. The titanium element 13 acts as a substrate which supports an electrolyte layer 16. Although the electrolyte layer 16 is preferably coated or deposited onto the titanium element 13 directly, it is to be appreciated that the electrolyte 16 could be manufactured separately and then located upon the element 13.

The advantages of directly manufacturing the electrolyte coating 16 onto the substrate 13 include a simple, economical manufacture, which can achieve a good contact between the electrolyte 16 and the titanium element 13. Titanium has a melting point of around 1575, and so a titanium substrate may be heated up to around 1450°C to facilitate the sintering of a ceramic layer deposited thereon. However, in certain circumstances, titanium and its alloys may be susceptible to oxidation, particularly at elevated temperatures. To prevent unwanted oxidation, the titanium-containing member may be protected by a coating, for example by a layer of ceramic material such as titanium nitride. A protective coating may conveniently be provided by a layer of ceramic material to be used as an interface or electrolyte layer. Certain parts of the protective coating may then be removed to reveal the surface of the titanium-containing member. Also, sintering may be performed under conditions which reduce or prevent oxidation of the titanium-containing member, such as under an inert atmosphere, for example of argon, or in a vacuum.

The titanium element 13, along with the electrolyte layer 16 may then be assembled into a fuel cell by, for example, placing an electrode on the upper surface of the electrolyte layer 16. If suitably treated, the titanium element 13 may then act as an electrode. In order to function efficiently as an electrode, the surface of the titanium member 13, in particular the porous region 14, must be treated or coated to impart beneficial catalytic and/or electrochemical properties. For example, a ceramic material, such as LSCF, may be deposited within the pores of the porous region 14 in order to give a practical reaction rate.

It is to be appreciated that there are numerous possible embodiments of the use of a porous titanium element as a substrate in a solid-state fuel cell. In particular, there may be more than one layer deposited on the substrate.

Figure 4 shows a cross-section of a further embodiment of a fuel cell element 18 which comprises a titanium substrate 19 having a porous region 20 and a non-porous region 21 in a similar manner to the element 17 illustrated in figure 3. On the upper surface of the titanium element 19 there is a first coating layer 22 which covers the porous area 20 of the substrate 19. In addition, there is a second coating layer 23 on top of the first coating layer 22. The first coating layer 22 may be an interface layer which has properties to enhance the mechanical and/or electrochemical properties of the fuel cell element 18. Alternatively, the first layer 22 may be an electrode itself with the titanium element 19 acting as a mechanical substrate for the electrode. In this element the second coating 23 is preferably an electrolyte layer.

The coatings 22 and 23 are preferably ceramic coatings which are deposited directly upon the titanium substrate and sintered thereon. It is to be appreciated that ceramic layers could be created on titanium or titanium alloy substrate in many other ways, with or without a sintering step.

Figure 5 shows a further embodiment of a fuel cell element 24 having a titanium substrate 25 upon which there are three layers of coatings 28, 29 and 30. The titanium element 25 has a porous region 26 bounded by a non-porous region 27. In a preferred embodiment, the first layer 28 is an interface layer between the element 25 which acts as an electrode and the second coating layer 29 which acts as an electrolyte. Upon the second layer 29 there is an interface layer 30 which may be sandwiched against an electrode when assembled in the fuel cell. However, as discussed above, the titanium member would need to be treated or coated in order to act as an efficient electrode, for example by the presence of catalysts and/or ceramic material within its pores.

Alternatively, the layers 28 and 30 may have beneficial properties as electrode layers, with the titanium substrate 25 acting as a mechanical substrate to support the layers 28, 29 and 30.

The porous regions of the titanium substrates allow for the transport of oxidant or fuel through the pores and, for example, into a coating supported thereon. It is to be appreciated that the titanium or titanium alloy elements encompassed by the invention may be modified in order to enhance their properties for use in fuel cells. For example, all or part of the surface of the titanium-containing element may be coated to provide, for example, increased chemical resistance. Alternatively, all or part of the titanium-containing element may be treated to enhance its electrochemical properties. For example, the porous region of a titanium-containing element may be doped with other metals or metal salts so that the oxidant or fuel may undergo a more efficient electrochemical reaction at its surface. Furthermore, all or part of the surface of the titanium-containing element may be machined, etched or otherwise treated to have a specific physical shape or texture. Such treatment may provide beneficial mechanical or thermal properties.

The titanium-containing element may also be electrodeposited onto a ceramic substrate. This technique can provide both porous and non-porous areas.

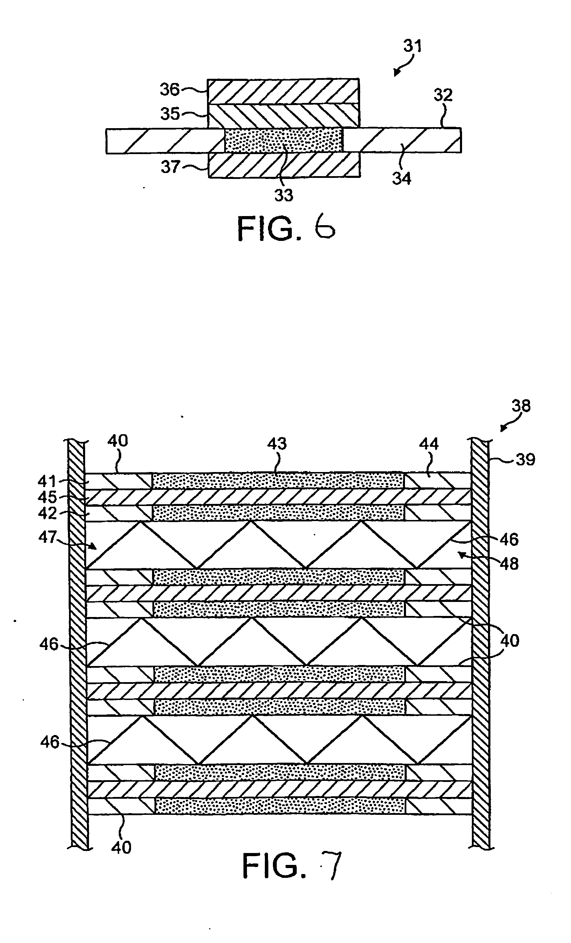

Figure 6 shows an alternative fuel cell element 31 having a titanium foil substrate 32 supporting three layers 35, 36 and 37. The titanium foil element 32 has a porous region 33 bounded by a non-porous region 34. On one side of the substrate 32 there is provided a layer 35 over the porous region 33. A second layer 36 is located on top of the first layer 35. On the opposite side of the substrate 32 there is located a third layer 37 which again covers the porous region 33. In this embodiment, the first and second layers 35 and 36 act as an interface layer and an electrolyte layer respectively. The third layer 37, in conjunction with the treated or coated titanium substrate 32, acts as an electrode layer. The coating 37 has beneficial properties which enhance the oxidation of the fuel or the reduction of the oxidant, depending upon which side of the fuel cell the element is to be used. Again, the coating layers 35, 36 and 37 may be deposited directly upon the substrate 32 and sintered thereon in a simple manufacturing process.

In order to generate a sufficient potential and current from fuel cells, it is common to create a stack of fuel cells electrically connected in series. Figure 7 shows a schematic illustration of such a stack of fuel cells 38. The fuel cells are contained within walls 39 which provide a gas-tight container for the fuel cell. It is to be noted that figure 7 does not show features such as oxidant inlets, fuel inlets or exhaust outlets.

Although it is beneficial to stack fuel cells in such a manner, there exist a number of problems with this approach. Firstly, each fuel cell must be provided with oxidant on one side and fuel at the other side. With an operating temperature of several hundred degrees Celsius, the fuel and oxidant must be kept physically separate otherwise explosions or other unwanted direct combustion may take place. Furthermore, the fuel cells generate a significant amount of heat which must be removed in some way. Accordingly, all these factors must be taken into consideration when constructing a stack of fuel cells.

Figure 7 shows a stack of fuel cell elements 40, each of which comprises a first electrode 41 and a second electrode 42 sandwiched around an electrolyte layer 45. The electrodes 41 and 42 comprise a titanium substrate having a central porous region 43 bounded by a non-porous region 44. Fuel is supplied to one side of the element 40 and oxidant supplied to the other side. Figure 1 shows a stack of four fuel cell elements 40 separated by corrugated interconnects 46. Each corrugated interconnect 46 is manufactured from titanium or an alloy thereof, preferably by pressing a metal sheet. As described above, substantially pure titanium, or an alloy comprising a majority of titanium, is suitable. The interconnect can also be manufactured by superplastic forming. The corrugated shape of the interconnect allows for the introduction of oxidant 47 and fuel 48 on opposite sides of the interconnect 46. Also, as titanium and its alloys are both thermally and electrically conductive, the interconnect 46 can provide an electrical and thermal connection between adjacent fuel cell elements 40. The interconnect 46 is preferably of a corrugated three-dimensional "egg-box" shape to allow for the efficient supply of fuel and oxidant to the electrodes 41 and 42 of each element 40. The interconnect may be coated on one or both sides to improve resistance to the oxidant and/or fuel.

In general terms, an interconnect is a component which is positioned between adjacent fuel cells in a stack of fuel cells. In a preferred embodiment, the interconnect is positioned between adjacent planar fuel cells in a stack. The interconnect serves two main purposes. Firstly, it provides an electrical connection between adjacent fuel cells in a stack of fuel cells. Secondly, it keeps the oxidant supplied to one fuel cell separated from the fuel supplied to the adjacent fuel cell.

In a preferred embodiment the interconnect 46 is connected to the electrode 41, for example by welding. The interconnect 46 is preferably manufactured from a sheet of titanium or titanium alloy thicker than the porous titanium-containing member. This is because the interconnect may need to withstand stronger forces and harsher conditions than the porous titanium member and provide mechanical support. Also, the use of a thin sheet or foil of titanium allows for the creation of very fine pores to form the porous region, especially where isotropic chemical etching is used to form the pores.

It is to be noted that where the word titanium is used in this specification, unless otherwise stated it comprises non-alloyed titanium as well as titanium alloys.

Preferably, the term "fuel cell" means the functional components making up a working fuel cell, excluding ancillary and associated apparatus. Thus, "fuel cell" preferably means the unit comprising two electrodes separated by an electrolyte, and essential electrical connections and housing, excluding such "external" components such as ducting for the fuel and oxidant.

Also, the phrase "solid state fuel cell" means fuel cells which do not have a liquid electrolyte. Accordingly, solid state fuel cells include ceramic fuel cells such as SOFCs and PCFCs. Also, although hydrogen has been described as a fuel, it is to be appreciated that numerous other fuels would also be suitable for use in fuel cells of the invention, such as hydrocarbons or alcohols. In particular, hydrocarbons, such as methane, may be reformed to provide a convenient fuel, or oxidised directly. Suitable alcohols include methanol and ethanol. The term "polymeric electrolyte" means an electrolyte comprising polymeric or plastics material, such as those used in PEM and/or direct methanol fuel cells.

The term "member" preferably means a functional and/or structural component of a fuel cell. More preferably, it refers to an "internal" component of a fuel cell as discussed above. As mentioned in the claims, it may form part or all of an electrode, may support an electrolyte and may support other components such as ceramic layers.

## Claims

1. A solid state fuel cell (17; 18; 24; 31; 40) comprising a ceramic electrolyte (8; 16; 23; 29; 36; 45), the fuel cell comprising a member (9, 10; 13; 19; 25; 32; 41, 42) having a porous region (11; 14; 20; 26; 33; 43) and a non-porous region (12; 15; 21; 27; 34; 44), the porous region being bounded by the non-porous region, and the member supporting one or more ceramic layers at least one of which is the electrolyte, **characterised in that** the member comprises metallic titanium or an alloy thereof comprising at least 51 wt% titanium.

2. A fuel cell according to claim 1 which is a ceramic fuel cell.

3. A fuel cell according to claim 1 or 2 which is a solid oxide fuel cell (SOFC).

4. A fuel cell according to claim 1 or 2 which is a protonic ceramic fuel cell (PCFC).

5. A fuel cell according to any preceding claim, having an electrode comprising the member.

6. A fuel cell according to any preceding claim, wherein the member supports an electrode.

7. A fuel cell according to any preceding claim, wherein at least one of the one or more ceramic layers comprises cerium gadolinium oxide (CGO), yttria stabilised zirconia (YSZ), nickel oxide/YSZ cermet, nickel oxide/CGO cermet, LSCF/CGO and/or doped lanthanum manganite.

8. A fuel cell according to any preceding claim, wherein the member supports a plurality of ceramic layers at least one of which is an electrode.

9. A fuel cell according to any preceding claim, wherein the member supports a plurality of ceramic layers at least one of which is an interface layer.

10. A fuel cell according to any preceding claim, wherein the member is a structural member.

11. A fuel cell according to any preceding claim, further comprising an interconnect (46) comprising titanium or an alloy thereof.

12. A fuel cell according to claim 11, wherein the interconnect is in contact with the member as defined in any of claims 1 to 11.

13. A fuel cell according to claim 11 or 12, wherein the interconnect comprises at least 51 wt% titanium.

14. A fuel cell according to any preceding claim, wherein the porous region comprises sintered metal powder.

15. A fuel cell according to any one of claims 1 to 13, wherein the porous region comprises metal felt.

16. A fuel cell according to any of claims 1 to 13, wherein the porous region is formed by laser machining.

17. A fuel cell according to any of claims 1 to 13, wherein the porous region is formed by electrodeposition.

18. A fuel cell according to any of claims 1 to 13, wherein the porous region is formed by etching.

19. A fuel cell according to claim 18, wherein the etching is photochemical etching.

20. A fuel cell according to claim 18, wherein the etching is electrochemical etching.

21. A fuel cell according to claim any preceding claim, wherein the member and/or any interconnect is formed by pressing.

22. A fuel cell according to claim 21, wherein the member and/or any interconnect is formed by superplastic forming.

23. A fuel cell according to any preceding claim, wherein the member and/or any interconnect comprise at least 98% wt titanium.

24. A fuel cell according to any preceding claim, wherein the member and/or any interconnect comprise at least 85 wt% titanium.

25. A fuel cell according to any preceding claim, wherein the member and/or any interconnect comprise at least 76 wt% titanium.

26. A fuel cell according.to any preceding claim, wherein the member and/or any interconnect comprise non-alloyed titanium.

27. A fuel cell according to any of claims 1 to 25, wherein the member and/or any interconnect comprise a titanium alloy.

28. A fuel cell according to claim 27, wherein the titanium alloy is selected from the group consisting of Ti-6Al-4V, Ti-3Al-2.5V, Ti-6Al-2Sn-4Zr-2Mo-0.08Si and Ti-15Mo3Nb-3AI-0.2Si.

29. A fuel cell according to any preceding claim, wherein the member and/or interconnect comprise metal foil.

## Patentansprüche

1. Festkörperbrennstoffzelle (17; 18; 24; 31; 40), die einen keramischen Elektrolyt (8; 16; 23; 29; 36; 45) umfasst, wobei die Brennstoffzelle ein Element (9; 10; 13; 19; 25; 32; 41; 42) umfasst, das eine poröse Region (11; 14; 20; 26; 33; 43) und eine nicht poröse Region (12; 15; 21; 27; 34; 44) aufweist, wobei die poröse Region durch die nicht poröse Region gebunden ist, und wobei das Element eine oder mehrere Keramikschicht(en) trägt, von denen zumindest eine der Elektrolyt ist, **dadurch gekennzeichnet, dass** das Element metallisches Titan oder eine Legierung davon umfasst, die zumindest 51 Gew.-% Titanium umfasst.

2. Brennstoffzelle nach Anspruch 1, die eine keramische Brennstoffzelle ist.

3. Brennstoffzelle nach Anspruch 1 oder 2, die eine Festoxid-Brennstoffzelle (SOFC) ist.

4. Brennstoffzelle nach Anspruch 1 oder 2, die eine Protonen-Keramik-Brennstoffzelle (PCFC) ist.

5. Brennstoffzelle nach einem der vorangegangenen Ansprüche mit einer Elektrode, die das Element umfasst.

6. Brennstoffzelle nach einem der vorangegangenen Ansprüche, worin das Element eine Elektrode trägt.

7. Brennstoffzelle nach einem der vorangegangenen Ansprüche, worin zumindest eine der einen oder mehreren Keramikschicht(en) Cer-Gadolinium-Oxid (CGO), yttriumoxidstabilisiertes Zirkoniumdioxid (YSZ), Nickeloxid/YSZ-Cermet, Nickeloxid/CGO-Cermet, LSCF/CGO und/oder dotiertes Lanthanmanganat umfasst.

8. Brennstoffzelle nach einem der vorangegangenen Ansprüche, worin das Element eine Vielzahl an Keramikschichten hält, von denen zumindest eine eine Elektrode ist.

9. Brennstoffzelle nach einem der vorangegangenen Ansprüche, worin das Element eine Vielzahl an Keramikschichten trägt, von denen eine zumindest eine Zwischenschicht ist.

10. Brennstoffzelle nach einem der vorangegangenen Ansprüche, worin das Element ein strukturelles Element ist.

11. Brennstoffzelle nach einem der vorangegangenen Ansprüche, die weiters eine Zwischenverbindung (46) umfasst, die Titan oder eine Legierung davon umfasst.

12. Brennstoffzelle nach Anspruch 11, worin die Zwischenverbindung in Kontakt mit dem Element ist, wie es in einem der Ansprüche 1 bis 11 definiert ist.

13. Brennstoffzelle nach Anspruch 11 oder 12, worin die Zwischenverbindung zumindest 51 Gew.-% Titan umfasst.

14. Brennstoffzelle nach einem der vorangegangenen Ansprüche, worin die poröse Region gesintertes Metallpulver umfasst.

15. Brennstoffzelle nach einem der Ansprüche 1 bis 13, worin die poröse Region Metallfilz umfasst.

16. Brennstoffzelle nach einem der Anspruche 1 bis 13, worin die poröse Region mittels Laserbearbeitung gebildet wird.

17. Brennstoffzelle nach einem der Ansprüche 1 bis 13, worin die poröse Region mittels Elektroabscheidung gebildet wird.

18. Brennstoffzelle nach einem der Ansprüche 1 bis 13, worin die poröse Region mittels Ätzung gebildet wird.

19. Brennstoffzelle nach Anspruch 18, worin das Ätzen photochemisches Ätzen ist.

20. Brennstoffzelle nach Anspruch 18, worin das Ätzen elektrochemisches Ätzen ist.

21. Brennstoffzelle nach einem der vorangegangenen Ansprüche, worin das Element und/oder eine beliebige Zwischenverbindung mittels Pressen gebildet werden/wird.

22. Brennstoffzelle nach Anspruch 21, worin das Element und/oder eine beliebige Zwischenverbindung mittels superplastischer Formung gebildet werden/wird.

23. Brennstoffzelle nach einem der vorangehenden Ansprüche, worin das Element und/oder eine beliebige Zwischenverbindung zumindest 98 Gew.-% Titan umfassen/umfasst.

24. Brennstoffzelle nach einem der vorangegangenen Ansprüche, worin das Element und/oder eine beliebige Zwischenverbindung zumindest 85 Gew.-% Titan umfassen/umfasst.

25. Brennstoffzelle nach einem der vorangegangenen Ansprüche, worin das Element und/oder eine beliebige Zwischenverbindung zumindest 76 Gew.-% Titan umfassen/umfasst.

26. Brennstoffzelle nach einem der vorangegangenen Ansprüche, worin das Element und/oder eine beliebige Zwischenverbindung nicht legiertes Titan umfassen/umfasst.

27. Brennstoffzelle nach einem der Ansprüche 1 bis 25, worin das Element und/oder eine beliebige Zwischenverbindung eine Titanlegierung umfassen/umfasst.

28. Brennstoffzelle nach Anspruch 27, worin die Titanlegierung aus der Gruppe ausgewählt ist, die aus Ti-6Al-4V, Ti-3Al-2,5V, Ti-6Al-2Sn-4Zr-2Mo-0,08Si und Ti-15Mo3Nb-3Al-0,2Si besteht.

29. Brennstoffzelle nach einem der vorangegangenen Ansprüche, worin das Element und/oder eine beliebige Zwischenverbindung eine Metallfolie umfassen/umfasst.

## Revendications

1. Pile à combustible à solide (17; 18; 24; 31; 40) comprenant un électrolyte céramique (8; 16; 23; 29; 36; 45), la pile à combustible comprenant un élément (9, 10; 13; 19; 25; 32; 41, 42) ayant une région poreuse (11; 14; 20; 26; 33; 43) et une région non-poreuse (12; 15; 21; 27; 34; 44), la région poreuse étant délimitée par la région non-poreuse, et l'élément supportant une ou plusieurs couches céramiques dont au moins une est l'électrolyte, **caractérisée en ce que** l'élément comprend du titane métallique ou un alliage de celui-ci comprenant au moins 51% en poids de titane.

2. Pile à combustible selon la revendication 1, qui est une pile à combustible céramique.

3. Pile à combustible selon la revendication 1 ou 2, qui est une pile à combustible à oxyde solide (SOFC).

4. Pile à combustible selon la revendication 1 ou 2, qui est une pile à combustible à céramique protonante (PCFC).

5. Pile à combustible selon l'une quelconque des revendications précédentes, ayant une électrode comprenant l'élément.

6. Pile à combustible selon l'une quelconque des revendications précédentes, où l'élément supporte une électrode.

7. Pile à combustible selon l'une quelconque des revendications précédentes, où au moins une ou plusieurs des couches céramiques comprennent de l'oxyde de cérium gadolinium (CGO), de la zircone stabilisée à l'yttrium (YSZ), oxyde de nickel/cermet YSZ, oxyde de nickel/cermet de CGO, LSCF/CGO et/ou du manganite de lanthane dopé.

8. Pile à combustible selon l'une quelconque des revendications précédentes, où l'élément supporte une pluralité de couches céramiques dont au moins une est une électrode.

9. Pile à combustible selon l'une quelconque des revendications précédentes, où l'élément supporte une pluralité de couches céramiques dont au moins une est une couche d'interface.

10. Pile à combustible selon l'une quelconque des revendications précédentes, où l'élément est un élément structurel.

11. Pile à combustible selon l'une quelconque des revendications précédentes, comprenant en outre une interconnection (46) comprenant du titane ou un alliage de celui-ci.

12. Pile à combustible selon la revendication 11, où l'interconnection est en contact avec l'élément tel que défini dans l'une quelconque des revendications 1 à 11.

13. Pile à combustible selon la revendication 11 ou 12, où l'interconnection comprend au moins 51% en poids de titane.

14. Pile à combustible selon l'une quelconque des revendications précédentes, où la région poreuse comprend de la poudre métallique frittée.

15. Pile à combustible selon l'une quelconque des revendications 1 à 13, où la région poreuse comprend du feutre métallique.

16. Pile à combustible selon l'une quelconque des revendications 1 à 13, où la région poreuse est formée par usinage au laser.

17. Pile à combustible selon l'une quelconque des revendications 1 à 13, où la région poreuse est formée par dépôt électrolytique.

18. Pile à combustible selon l'une quelconque des revendications 1 à 13, où la région poreuse est formée par attaque chimique.

19. Pile à combustible selon la revendication 18, où l'attaque chimique est une attaque photochimique.

20. Pile à combustible selon la revendication 18, où l'attaque chimique est une attaque électrochimique.

21. Pile à combustible selon l'une quelconque des revendications précédentes, où l'élément et/ou toute interconnection est formée par pressage.

22. Pile à combustible selon la revendication 21, où l'élément et/ou toute interconnection est formé par formage superplastique.

23. Pile à combustible selon l'une quelconque des revendications précédentes, où l'élément et/ou toute inteconnection comprend au moins 98% en poids de titane.

24. Pile à combustible selon l'une quelconque des revendications précédentes, où l'élément et/ou toute interconnection comprend au moins 85% en poids de titane.

25. Pile à combustible selon l'une quelconque des revendications précédentes, où l'élément et/ou toute interconnection comprend au moins 76% en poids de titane.

26. Pile à combustible selon l'une quelconque des revendications précédentes, où l'élément et/ou toute interconnection comprend du titane de non-alliage.

27. Pile à combustible selon l'une quelconque des revendications 1 à 25, où l'élément et/ou toute interconnection comprend un alliage de titane.

28. Pile à combustible selon la revendication 27, où l'alliage de titane est sélectionné dans le groupe consistant en Ti-6A1-4V, Ti-3A1-2.5V, Ti-6A1-2Sn-4Zr-2Mo-0,08Si et Ti-15Mo3Nb-3AI-0,2Si.

29. Pile à combustible selon l'une quelconque des revendications précédentes, où l'élément et/ou l'interconnection comprend une feuille métallique.
